# EUROPEAN PATENT SPECIFICATION

(11) **EP 1 089 551 B1**
(45) Date of publication and mention of the grant of the patent: **15.08.2007**
(21) Application number: 00307906.8
(22) Date of filing: 13.09.2000
(51) Int. Cl.: H04N 1/327

(54) **Communication apparatus for interfacing with networks having different standards**
Kommunikationsgerät zum Verbinden mit Netzwerken mit verschiedenen Standards
Dispositif de communication capable d'établir un interface avec des réseaux de standards différents

(30) Priority: 30.09.1999 JP 27861199
(43) Date of publication of application: 04.04.2001
(73) Proprietor: Ricoh Company, Ltd., Tokyo 143-8555 (JP)
(72) Inventor: Orikasa, Noriaki, Atsugi-shi, Kanagawa-ken (JP); Okabe, Shouzi, Atsugi-shi, Kanagawa-ken (JP)
(74) Representative: Senior, Alan Murray

(56) References cited:
- EP-A- 0 748 104
- EP-A- 0 766 447
- EP-A- 0 917 339
- WO-A-98/38786
- WO-A-99/34581
- WO-A-99/66704
- FR-A- 2 732 506
- US-A- 5 430 793

## Description

The present invention generally relates to a communication apparatus, and in particular relates to a telephone line interface of a facsimile and a copier, a printer, and a card MODEM or the like respectively having a facsimile function.

Recently, communication standards adopted by European countries are unified into the Common Technical Regulation 21 (hereinafter referred to as the CTR 21). However, characteristic of the direct current flowing through a network control section of the communication apparatus, e. g., a facsimile, is different from that of the conventional standard. Namely, the direct current is required to bear nonlinear characteristic that limits a direct current flowing through a direct current circuit to a prescribed value.

Further, since communication standards adopted by many countries beside the Europe are not unified, a linear characteristic is required depending on a country, and the direct current characteristic is required to be switched depending on a destination country.

Therefore, two different baseboards for generating different kinds of direct currents are necessary for the network control section of the communication apparatus when communication with another country adopting a different communication standard is practiced. Namely, a network control unit having both a background direct current circuit which does not limit a direct current to a prescribed value and that having the direct current circuit for the CTR 21 use, i.e., which limits a direct current thereto, should be provided.

Further, characteristic of a network, except for external line network connection executed by a public exchanger based on the Post Telephone Telegram standard (hereinafter referred to as the PTT standard) of the country, sometimes is not based on the PTT standard of the applicable country.

Specifically, an internal line exchanger operable in a constant current is included among internal line exchangers, such as a small business use internal exchanger (hereinafter referred to as a PABX) or a home PABX and a large scaled exchanger employed in a business in one's own right for a private line.

When using such an internal line exchanger, a communication apparatus cannot form a network connection with the internal line exchanger, if the communication apparatus operates at a current value larger than that of the direct current limited to a prescribed value. This is because, the network characteristic of the internal line is generally different depending on its manufacturer.

Further, there is a stricter standard for parameters related to a control operation of the general public line network than the other network. However, parameters related to a control operation of the other network can be extensively set considering general purpose. Thus, the above-mentioned current limitation is generally not practiced in the internal line exchanger.

For example, the Japanese Patent Application laid Open No. 8-335994 describes technology related to the above-mentioned apparatus. The technology changes inclination of the direct current depending on a country by connecting resisters in parallel to a photo relay, so that a direct current generating circuit is possible to generate a direct current in accordance with a standard of the telephone line of an applicable destination country with a simple construction.

However, the above-mentioned related technology can not generate a direct current bearing nonlinear characteristic that limits a current flowing through the circuit to a prescribed value. Further, it is not necessary to limit direct a current flowing through the circuit when controlling a network except for the general public line network, and is rather a cause of problems.

WO-A-98/38786 discloses an adaptable impedance device in which an NPN transistor samples the current flowing from the emitter of a Darlington pair, so as to turn on when a line voltage exceeds a predetermined value.

The present invention has been made in view of the above noted and another problems and one aim of the present invention is to address and resolve such problems.

The present invention provides a communication apparatus as defined in the appended claim.

A more complete appreciation of the present invention and many of the attendant advantages thereof will be readily obtained as the same becomes better understood by reference to the following detailed description of exemplary embodiments and the accompanying drawings, wherein:
Fig. 1 is a chart illustrating a construction of a facsimile described for reference;
Fig. 2 is a chart illustrating a construction of the network control section of the facsimile illustrated in Fig. 1;
Fig. 3 is a chart illustrating a construction of the direct current circuit of the network control section illustrated in Fig. 2;
Figs. 4A and 4B are graphs respectively illustrating electrical characteristic of the direct current circuit, i.e., the direct current having non-linear characteristic and that having a linear characteristic;
Fig. 5 is a chart illustrating a construction of the direct current circuit of the first embodiment;
Fig. 6 is a flowchart illustrating a switching operation for switching to a directcurrent limiting mode, executed at a time of call generation in the first embodiment;
Fig. 7 is a flowchart illustrating a switching operation for switching to a direct current limiting mode, executed at a time of reception in the first embodiment;
Fig. 8 is a flowchart illustrating a switching operation for switching to a direct current limiting mode, executed in the second embodiment;
Fig. 9 is a flowchart illustrating a switching operation for switching to a direct current limiting mode, executed at a time of call generation in the third embodiment; and
Fig. 10 is a flowchart illustrating a switching operation for switching to a direct current limiting mode executed at a time of reception in the third embodiment.

Referring now to the drawings, wherein like reference numerals and marks designate identical or corresponding parts throughout several views.

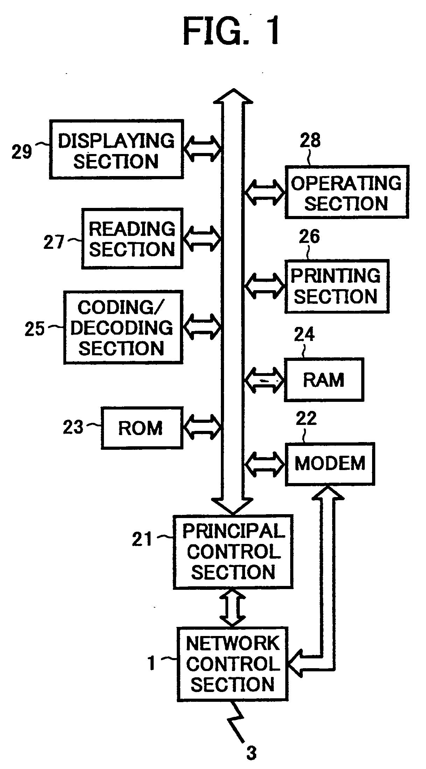

A reference facsimile apparatus is now described referring to Figs. 1, 2 and 3.
A principal control section 21 may include a central processing unit (hereinafter referred to as a CPU) or similar devices and perform processing operations of internal sections and its elements of the facsimile according to a variety of control programs stored in a ROM 23. A RAM 24 may store a variety of data and include a work area for use in an entire control of the facsimile. The RAM 24 may store a predetermined dial number, such as zero, used when switching from an internal line to an external line, vice verse, frequency used when ringing wave is referred to, and a cadence ON/OFF time period representing signal ON/OFF timing or the like. Further, the RAM 24 may double as an image memory for storing image data encoded by an encoding/decoding section 25.

The encoding/decoding section 25 may compress transmission image data using a prescribed encoding method, such as a MH.MR.MMR encoding method, and may expand and decode reception image data using a prescribed decoding method, such as a MH.MR.MMR decoding method.

A recording section 26 may be provided and is composed of a conventional electrophotographic system including processes, such as charging, tracing, exposing, developing, discharging, transferring, separating and cleaning operations or the like. The recording section 26 may print out image data read, image data received, and a report or the like with prescribed resolution. The image data received may be printed out on a transfer sheet with a prescribed line density, e.g., 3.85 lines, 7.7 lines and 15.4 lines per millimeter. A reading section 27 may be provided and optically read line by line an original image with prescribed resolution, and may convert into image data corresponding to line density thereof.

An operating section 28 may be provided and include the following key group. It may include a start/stop key for generating a trigger signal for each operation, a ten key as a dial key, a one-touch key, a setting/resetting key for setting and resetting a variety of modes, a facsimile using country designating key for designating a facsimile using country, and a function key for practicing a variety of other processes.

The operating section 28 may transmit information to the principal control section 21 when any of keys is depressed.

A display section 29 may be provided and include a displaying device, such as a liquid crystal display and a light emitting diode. The display section 29 may display information when the information is inputted and set by the operating section 28, so that a user can confirm the contents thereof.

A MODEM 22 may be connected to a line 3 via a network control section 1. The MODEM 22 may modulate image data to be transmitted to the line 3, and may decode a signal received from the line 3 via the network control section 1. Further, the MODEM 22 may transmit a DTMF or PB signal, detect a reception signal, and switch from a telephone mode to a facsimile mode, vice versa, thereby performing a procedure of the prescribed - facsimile transmission control operations.

A network control section 1 may be provided and include a ringing/OFF-hook detecting device having a later mentioned call signal detecting circuit 19, a dial call generating device including a later mentioned photo-coupler 14 and a transducer 17, and a later mentioned direct current circuit 15 or the like.

A network control section 1 may practice a prescribed line control operation both at times of signal transmission and its reception using the principal control section 21, and controls cutting off and establishing operations of the line. Further, a handset, not shown, may be connected to the network control section 1 and is utilized for telephone communication or the like with the other office.

Further, a power source voltage may necessarily be supplied to each unit of the facsimile when the principal control section 21 transmits a power source control signal to a power source switching section, not shown. Further, the each section may perform necessary data communication via a bus line.

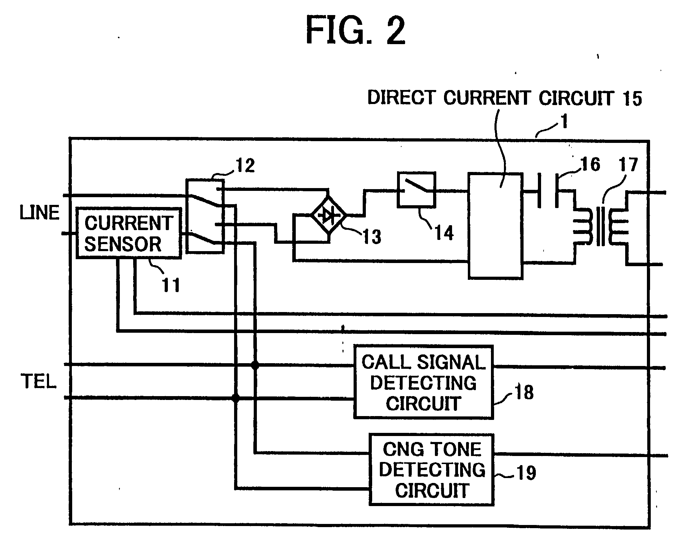

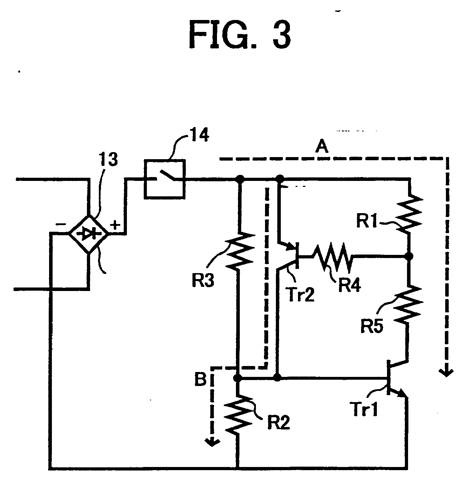

The network control section 1 may include the following devices as illustrated in Fig. 2. A relay 12 capable of connecting with the line 3 corresponding to a telephone mode (hereinafter referred to as a TEL mode) or a facsimile mode, a current sensor 11 for detecting a current flowing through the line 3, and a CNG tone detecting circuit 19 for detecting a tone signal, such as CNG which represents that a communication sender is a facsimile, may be provided. A call signal detecting circuit 18 for detecting a ringing signal and binarizing its ringing wave, and a diode bridge 13 for adjusting a polarity of the direct current voltage may be provided. Further, a direct current circuit 15 for flowing a loop state direct current, a photo-coupler 14 for controlling opening/closing operations of the direct current loop, i.e., controlling direct current ON/OFF operations, and allowing transmission of a dial pulse of a recipient identification number. A condenser 16 for cutting off a direct current, and a transducer 17 for transmitting a signal from a primary side to a secondary side and transmitting a DTM or PB signal from the MODEM 22 may be also provided. A prescribed circuit for switching from a two-line side (a line side) to a four-line side (a MODEM side), vice versa, may be connected to the secondary side (winding) of the transducer 17.
The direct current circuit 15 is now described more in detail referring to Fig. 3. The direct current circuit 15 may be composed of four resisters R1 through R4, and two transistors Tr1 and Tr2. Among those, the transistors Tr2 or similar devices arranged in the route B may constitute the direct current limiting circuit. A communicating operation of the facsimile is now described. Before a ringing signal is detected and facsimile communication is practiced, the relay 12 illustrated in Fig. 2 is turned into a side of the call signal detecting circuit 18, i.e., a TEL (hand set) side.
A call signal from a line is detected by the call signal detecting circuit 18, and a detection signal is generated. The detection signal is then inputted to the CPU of the principal control section 21, and is determined if it is a prescribed call signal for facsimile communication. If it is the prescribed call signal, the relay 12 is turned into the transducer side 17 with a command transmitted from the CPU, and thereby the line 3 is closed. Then, a direct current flows into the direct current circuit 15 via the photo coupler 14 from a plus side of the diode-bridge 13. Thereby, a direct current loop is formed. The direct current then enters into a minus side of the diode bridge 13, and is outputted to the line 3 via the relay 12.

A plurality of signals of the facsimile communication may enter into the diode bridge 13 from the line via the relay 12, and may be outputted from its plus side and enter into the transducer 16 via the photo coupler 14, the direct current circuit 15, and the condenser 16. A signal appearing at one end of the primary side winding when a current flows through the primary side winding may enter into the minus side of the diode bridge 13 via the direct current circuit 15, and returns to the line via the relay 12.

Further, signals transmitted to the secondary side of the transducer 17 are separated into a transmission signal and a reception signal using a conventional two-line circuit and_four-line circuit, not shown. After that, these may be transmitted to the MODEM, and are modulated and demodulated.

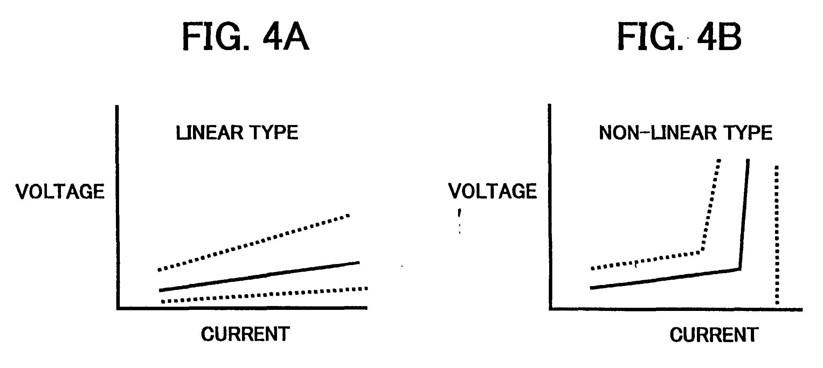

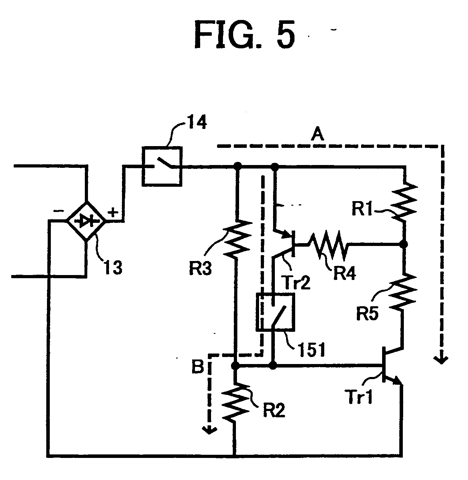

A transistor Tr2 and similar devices provided in a route B illustrated in Fig. 3 may constitute a direct current limiting device. A relay and a photo-coupler or similar devices may constitute a switching device 151 illustrated in Fig. 5. The operating section 28 and the principal control section 21 or the like may constitute a designating device. The network control section 1 including the photo-coupler 14 and the transducer 17 or the like may constitute a dial call-generating device. The display section 29 or the like may constitute a displaying device. The operating section 28 or the like may constitute a setting device. Further, the network control section 1 including the call signal detecting circuit 19 may constitute a ringing (signal) detecting device. A direct current limiting operation of the direct current circuit 15 is now described in detail referring to Figs. 3 and 4. When a line voltage is impressed on the direct current circuit 15 and is separated by the resistors R2 and R3, some current may flow into the base of the transistor Tr1. As a result, the base reaches a prescribed transistor activating voltage level, and some current flows from the collector to the emitter of the transistor Tr1, and accordingly, through the route A. When the current is relatively small, the line voltage may increase in proportion to product obtained by multiplying the sum of the values of resisters R1 and R5 and a value of the current, because the current almost only flows through the resistors R1 and R5 of the route A. current, a current having more than a prescribed value may flow through the resister R1. This is because, a value of the current flowing through the circuit may increase as a result of the impression of the additional voltage.

Further, the current may flow into the base of the transistor Tr2 through the resister R4, and thereby the base may reach a prescribed value of the voltage activating the transistor Tr2. With the transistor Tr2 being in the active state, a current having a small value may flow from the emitter to the collector of the transistor Tr2, and further flow into the resistor R2. Then, since value of the resister R2 is large enough, the voltage of the line 3 may increase, even if the current is small. Thus, the current flowing through the direct current circuit 15 is limited to a prescribed value. Namely, a large line voltage may be required when more current is going to flow through the route A due to rising of the voltage between the resister 2.

Accordingly, the direct current bearing nonlinear characteristic, which limits the current to a prescribed value as illustrated in Fig. 4B, can be attained. Since it is required for the European unified standard (CRT 21) to limit a current to 40mA,
a value of the resistor R1 may be set considering the activating voltage of the transistor Tr2.

Since inclination of the current may be determined by a value of the resistor R4, direct current characteristic satisfying a nonlinear type illustrated in Fig. 4B can be attained by adjusting the resistor value corresponding to the CRT 21.

As mentioned earlier, the nonlinear type is inherent to the European unified standard, and direct current characteristic of countries not employing the European unified standard is generally a linear type. Further, the direct current characteristic for the internal line exchanger, such as a PABX, is generally the linear type.

A first embodiment is now described referring to Fig. 5. A construction of another type of the direct current circuit 15 is illustrated there.
Constructions of a network control section 3 and a facsimile are substantially the same with the first embodiment.

A switching device 151 may be provided between a transistor Tr2 and the resister R2 in the direct current circuit 15, and may be configured to optionally connect and disconnect with a route B. The switching device 151 may be constituted by a relay or a photo coupler or a similar device controlled by the principal control section 21 via a signal line, not shown.

A setting operation for setting an operating condition of the relay, i.e., either limiting a direct current or not, can be performed in the following manner. A service person or a user may operate a display section 29 using a key or a similar device provided on the operating section 28, and may display a selection screen.

The service person may then select and input to the selection screen ON/OFF signals respectively representing that the direct current limiting operation is executed and stopped. The inputted contents may be transmitted from the operating section 28 to the principal control section 21, and may be set and stored in a direct current limitation ON/OFF flag provided in the RAM 24. The principal control section 21 may instruct the switching device 151 so as to set and clear direct current limitation and non-limitation modes via the signal line, and may control direct a current flowing through either the route A or B.

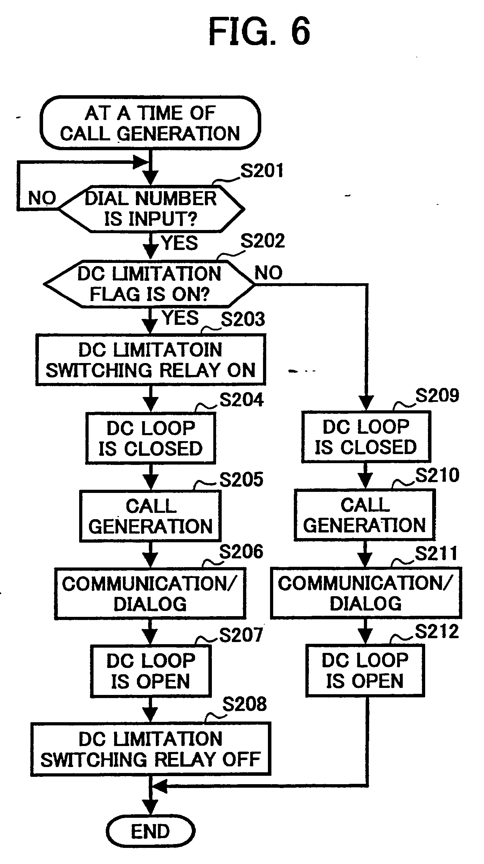

When the route B is cut off between the transistor Tr2 and the resister R2, a current may only flow through the route A, and direct current characteristic satisfying the linear type standard as illustrated in Fig. 4A may be obtained. A direct current limiting operation executed when any call such as a telephone call or a facsimile call is generated is now described referring to Fig. 6. The dial call generation should be an auto call generation.

When a call is to be generated, i.e., a user starts inputting a dial number as a transmission sign through the operating section 28 (Yes in step S201), the principal control section 21 may confirm a status of the direct current limitation ON/OFF flag corresponding to the dial number (in step S202).

If it determines that the direct current limitation ON/OFF flag is in the active state (Yes in step S202), the principal control section 21 may turn ON the relay of the switching device 151 (in step S203). Then, the transistor Tr2 and the resister R2 are connected with each other, and thereby some current is possible to flow through the route B. Further, by turning ON the photo coupler 14 and thereby closing a direct current loop (in step S204), a direct current is simultaneously limited to a prescribed value. As a result, a direct current having nonlinear characteristic may be generated, because the route B may limit a current flowing through the direct current circuit in a same manner as mentioned earlier.

Hence, the photo coupler 14 may be turned ON/OFF when dial pulses are to be transmitted. The MODEM 22 may execute dial call generation (in step S205) when a DTMF as a tone signal or a PB signal as a dial pulse signal is transmitted. After that, when communication and dialog are completed (in step S206), the direct current loop may be opened as a sign of completion of the communication and dialog (in step S207), and the relay of the switching device 151 may be turned OFF (in step S208).
Thereby, all operations are finalized.

On the other hand, if it is determined in step S202 that the direct current limitation ON/OFF flag is in the OFF state, the relay of the switching device 151 may not be turned ON, i.e., it keeps an initial state or an OFF state, and thereby the route B is cut off at a portion between the transistor Tr2 and the resister R2. The direct current loop may then be closed by turning ON the photo coupler 14 (in step S209), and direct current having linear characteristic may be generated by the route A. Further, a prescribed call generating operation may be executed as mentioned above (in step S210). When communication and dialog are completed (in step S211), the direct current loop is opened, and thereby all operations are finished (in step S212).

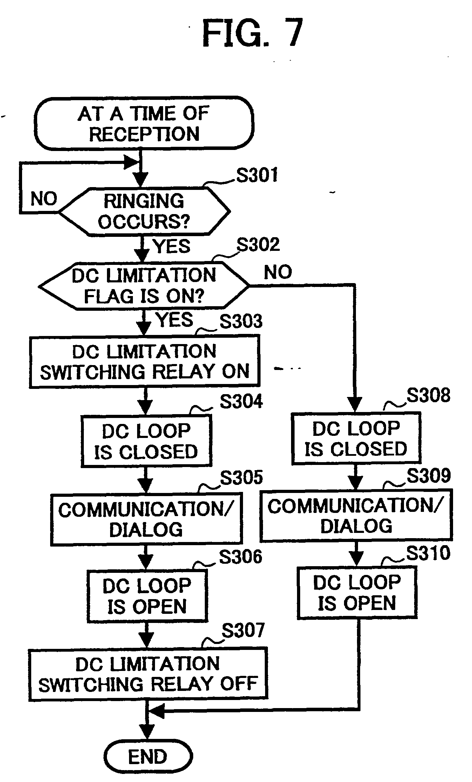

A direct current limiting operation practiced at a time of any reception is now described referring to Fig. 7. Ringing reception should be auto reception.

When a ringing signal as a reception sign is inputted from the line 3 via a call signal detection circuit 18 (Yes in step S301), the principal control section 21 may confirm the direct current limitation ON/OFF flag stored in the RAM 24 corresponding to the ringing signal.

When determining that the direct current limitation ON/OFF flag is in the active state, the relay as a switching device 151 may be turned ON (in step S303), and the transistor Tr2 may be connected with the resisterR2 so that a current flows through the route B. The direct current may be limited to a prescribed value in the same manner as mentioned earlier, when the photo-coupler 14 is turned ON and thereby the direct current loop is closed (in step S304). Thus, a direct current bearing nonlinear characteristic may be generated by the route B.

After that, when communication and dialogue are completed (in step S305), the direct current loop is opened (in step S306), and the switching device 151 turned OFF (in step S307). Thereby, all operations are finalized.

On the other hand, when it is determined that the direct current limitation ON/OFF flag is not in the active state (in step S302), the switching device 151 is not turned ON, i.e., it keeps an initial state or an OFF state. After that, the photo-coupler 14 is turned ON, so that the direct current loop is closed (in step S308). (Then, the route A as mentioned earlier may generate the direct current bearing liner characteristic.) When the communication and dialogue are completed (in step S309), the direct current loop is opened (in step S310), and the all operations are finalized.

Thus, according to this embodiment, a direct current having nonlinear characteristic may be generated by connecting the transistor Tr2 with the resister R2 having relatively large value via the switching device 151, thereby a current flowing through the direct current circuit 15 may be limited to a prescribed value.
Further, a direct current having linear characteristic may be generated by cutting off the connection between the transistor Tr2 and the resister R2 using the switching device 151. Since a direct current generating mode can be switched from a current limiting mode to a non-current limiting mode, vice versa, using substantially the same constitutional network control section 1 and the switching device 151, the facsimile can be applied to both types of a country, i.e., a type adopting the European unified standard and that adopting a different communication standard. In addition, a plurality kinds of network control sections 1 is not required.

As a modification, a service person can optionally set a direct current limitation ON/OFF mode by turning a bit switch or a dip switch.

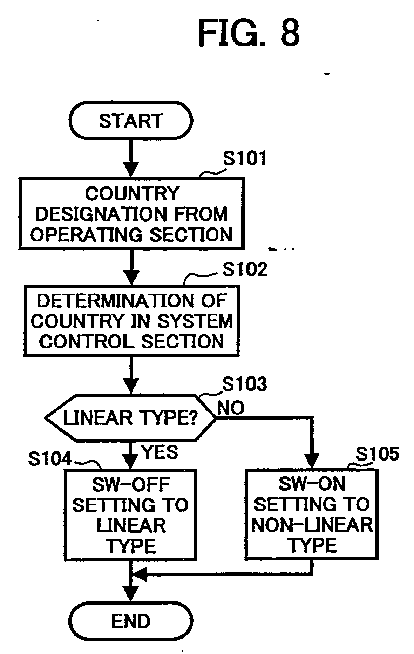

The second embodiment is now described referring to Fig. 8. A construction of a network control section 1 having a direct current circuit is substantially the same with the second embodiment.

A switching condition of the switching device 151 may be predetermined depending on a country, so that electrical characteristic of the direct current is allocated to each country beforehand. Namely, information related to the country including its name, its code number or the like may be stored in a RAM or similar devices. Further, the principal control section 21 may turn the switching device 151 based on the information, i.e., the switching condition.
Specifically, a prescribed facsimile using country is designated (in step S101) by operating a facsimile using country designating key provided on the operating section 28 when a facsimile is to be purchased or is to be shipped. The country designating information is transmitted from the operating section 28 to the principal control section 21, and the country is recognized there. It is determined after that if a standard of the country belongs to a linear characteristic type (in step S102).

If it is the linear characteristic type, the transistor Tr2 and the resister R2 are disconnected with each other and accordingly, the route B is cut off. Thus, a direct current having linear characteristic may be generated by the route A (in step S104). On the other hand, when the standard of the country is the nonlinear type, the transistor Tr2 and the resister R2 may be connected with each other and a direct current may accordingly be limited by the route B. Thereby, a direct current having nonlinear characteristic may be generated (in step S105).

According to the second embodiment, since the switching device 151 may automatically operate according to a communication standard of the country, to which the communication is executed or from which the communication is received, when a prescribed country is designated, direct current characteristic can properly and automatically be attained with a facile operation.

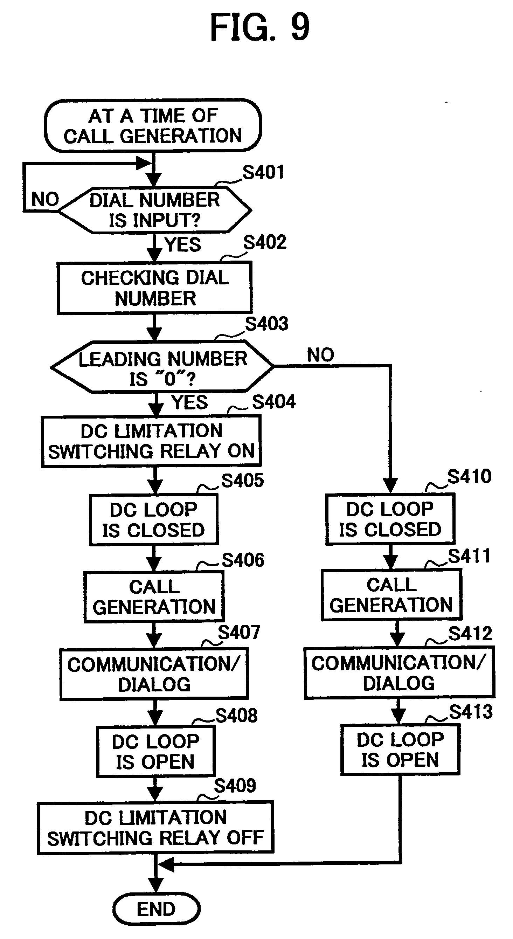

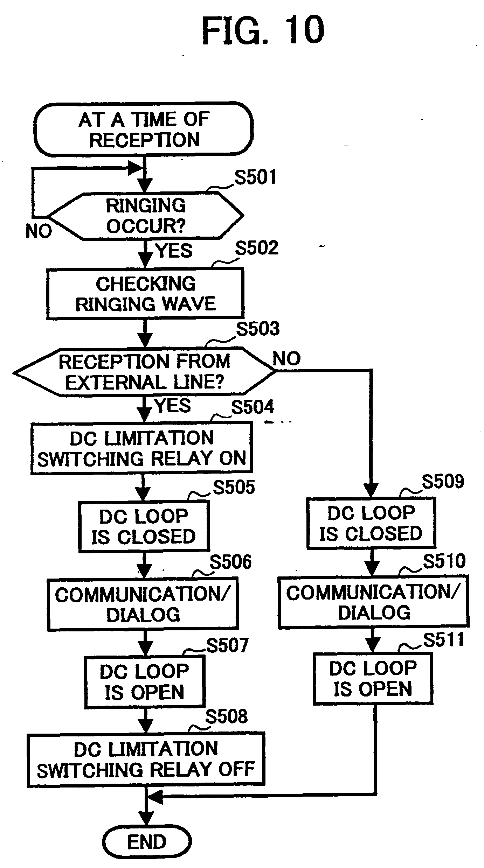

The third embodiment is now described referring to Figs. 9 and 10. A construction of a network control section 1 having a direct current circuit 15 is substantially the same with the second embodiment. The network control section 1 may include a photo-coupler and a transducer or the like. The network control section 1 may include a call signal detecting circuit 19 or the like. When call is generated, the principal control section 21 may determine from a dial pulse or a dial number of a DTMF signal or a PB signal transmitted from the network control section 1, whether it is communication to be practiced by the general public line network or the other. A turning ON/OFF operation may be automatically executed by the switching device 151 based on the determination result. Specifically, since it is external line call generation when the dial number is zero, the switching device 151, only in this case, may connect the transistor Tr2 with the resister R2. Accordingly, a direct current having nonlinear characteristic suitable for the European unified standard is generated, because a current flowing through the circuit is limited to a prescribed value as mentioned earlier.

On the other hand, when any call signal is received and detected by the network control section 1, the principal control section 21 may compare ringing wave of the call signal with ringing wave information, e.g., network control use parameter for the general public line, which is previously stored in the RAM 24 or the ROM 23. If those accord with each other, since the ringing wave may be supposed to be transmitted from the external line, i.e., communication from the general public line network, a direct current bearing nonlinear type characteristic may be generated, only in this case, by operating the switching device 151 in the same manner as mentioned earlier.

To execute the above-mentioned operation, prescribed information of zero representing transmission from the external line and the other representing transmission from the internal line, for example, may be preset through the operating section 28 and stored in the RAM 24, so that an internal line, i.e., a line except for the general public line, and an external line, i.e., the general public line can be recognized. Further, a variety of parameters, such as wave of a ringing signal and its level or the like, related to network control executed by both the external and internal lines, can be previously inputted and set using the bit switch or similar devices provided on the operating section 28, and may be stored in the RAM 24. Such information may be referred to when determining either the transmission is from the internal line or the external line.

A direct current limiting operation executed in this embodiment when any call is generated is now explained referring to Fig. 9. This embodiment may premise that external call generation requires a direct current limiting operation, and a switching operation for switching to the external line is executed when the first dial number is zero. Further, internal call generation does not require the direct current limiting operation, and is practiced when the first dial number is not zero. Further, dial call generation should be auto call generation.

When a user starts inputting a dial number of a recipient as a transmission signal through the operating section 28 (in step s401), the principal control section 21 may compare the dial number with a prescribed internal/external switching number stored in the RAM 24 (in step S402).

If the leading number is detected as zero (in step S403), since it represents the external line call generation, the relay of the switching device 151 is turned ON (in step S404), and the transistor Tr2 is connected to the resister R2, thereby enabling a current to flow through the route B. Further, the direct current loop is closed by turning ON the photo-coupler 14 in the earlier mentioned manner (in step s405), and thereby the route B limits the current flowing through the direct current circuit 15. Thus, a direct current bearing nonlinear characteristic may be generated.

A call generating operation may then be executed (in step S406). The direct current loop may be opened (in step S408) and the relay as the switching device 151 may also be turned OFF (in step s409), when communication and dialogue are completed (in step S409). Thereby, all operations are finalized.

On the other hand, since it is internal call generation when the leading dial number is not zero, the principal control section 21 does not turn ON the switching device 151, i.e., it keeps an initial state or an OFF state, and may disconnect the transistor Tr2 with the resister R2, i.e., it keeps the route B being cut off (in step S403). Further, the principal control section 21 may close the direct current loop by turning ON the photo-coupler 14 (in step s410). Thereby, a direct current having linear characteristic may be generated using the route A in the same manner as mentioned earlier. A call generating operation may then be executed (in step s411). The direct current loop may be opened (in step S413), when the communication and dialogue are completed (in step S412), thereby finalizing all operations.

A direct current limiting operation of this embodiment executed when any reception is made is now explained referring to Fig. 10. It may be determined from frequency of ringing wave, cadence, and an ON/OFF time period or the like of the reception whether an external line communication requiring direct current limitation or an internal line communication not requiring the direct current limitation is received. The ringing signal reception should be executed by automatically recognizing a ringing signal and receiving thereof.

When a ringing signal as a reception sign is inputted from the line 3 (in step S501), the principal control section 21 may compare the ringing signal with the ringing parameters of the internal and external lines stored in the RAM 24, thereby examining the ringing wave (in step s502). If reception is determined as from the external line (in step S503), since the direct current limitation is required, the relay as the switching device 151 is turned ON in a manner as mentioned earlier (in step S504), and the transistor Tr2 is connected to the resister R2.

Further, a direct current loop is closed by turning ON the photo-coupler 14 (in step S505), and a direct current bearing nonlinear characteristic is generated, because a current flowing the direct current circuit is limited by the route B in the same manner as mentioned earlier. When communication and dialogue are completed (in step S506), the direct current loop is opened (in step S507) and the relay of the switching device 151 is turned OFF (in step S508), thereby all operations are finalized.

On the other hand, if reception is determined as from the internal line (in step s503), since the direct current limitation is not required, the switching device 151 is not turned ON, i.e., it keeps the initial state or the OFF state. Thus, the transistor Tr2 is kept disconnected with the resister R2. Thus, when the photo-coupler 14 is turned ON, and accordingly the direct current loop is closed (in step S509), a direct current bearing linear characteristic may be generated by the route A with the route B being cutting off. When communication and dialogue are completed (in step S510), the direct current loop is opened (in step S511), and all operations are finalized.

As a modification, an internal line button to be depressed when internal line transmission is practiced and an external line button to be depressed when external line transmission is practiced can be provided, and an operation similar to the "zero call generation" mentioned earlier can be performed when the external line button is depressed. In such case, a step for determining if the internal or external line button is depressed may be employed in stead of executing the steps from S401 to S403 mentioned above.

As another modification, if the internal line use parameter can be extensively set more than the external line use parameter, i.e., parameter related to network control for the general public line which should cover a prescribed standard, parameter representing non-direct current limitation can be added to the internal line use parameters.

In this case, the relay of the switching device 151 can be controlled to be turned OFF using the parameter when a mode is switched to the internal line. The relay of the switching device 151 may be turned OFF when a mode is switched to the external line.

As yet another modification, parameter representing direct current limitation can be added to external line use parameters, and the relay of the switching device 151 may be controlled to be turned ON using the external line use parameter in response to switching to the external line mode.

In such cases, a parameter setting screen can be displayed on the displaying section 29, and a user or the like can set the above-mentioned internal or external line use parameter with a key operation through the operating section 28. Otherwise, a bit switch for setting a variety of parameters can be provided on the operating section 28, and a service person or the like can select and set prescribed parameter representing either non-direct current limitation as internal line use parameter or direct current limitation as external line use parameter by operating thereof.

Thus, it is possible to limit the loop state direct current by inputting a prescribed signal through either the bit switch or the setting screen as mentioned earlier, and by turning ON the switching device 151 when external line call generation or its reception is practiced before closing the direct current loop.

Thus, a prescribed network interface suitable for network characteristic of the exchanger can be automatically selected according to the external and internal line communications. Because, parameter representing non-direct current limitation may be included in the internal line use parameters and that representing the direct current limitation may be included in the external line use parameters.

The present invention can include wide range applications of a network control section (NCU) having an interface function with a communication line in the communication apparatus. Obviously, numerous additional modifications and variations of the present invention are possible in light of the above teachings. It is therefore to be understood that within the scope of the appended claims, the present invention may be practiced otherwise than as specifically described herein.

## Claims

1. A communication apparatus selectively connectable to a communications line (13), said communications apparatus comprising a current limitation device (15) configured to limit current from flowing from the communications line, wherein said current limitation device comprises:
a first transistor (Tr1) having its base connected to the dividing point of a voltage divider so as to be configured to be turned on by a communications line voltage when the communication line is connected to the communications apparatus;
a first resistance (R1) serially connected between the collector of the first transistor and the communications line (13);
a second transistor (Tr2) having its base coupled to said dividing point and configured to be turned on when an amount of current equal to or more than a prescribed level flows through the first resistance;
a second resistance (R2) forming part of said voltage divider configured to receive current flowing from the collector of the second transistor when the second transistor turns on; and
a third resistance (R4) connected between the base of the second transistor (Tr2)and the first resistance (R1);
wherein non-linear type direct current characteristics are obtained by supplying said current flowing from the communications line to the second resistance by bypassing the first resistance, when the communications line voltage reaches a value such that a current equal to or more than the prescribed amount would flow through the first resistance;
and the non-linear type direct current characteristics of the device are determined by adjusting a value of the third resistance; and said current limitation device further comprises a switching device (151) between the collector of the second transistor (Tr2) and said dividing point.

## Patentansprüche

1. Kommunikationsvorrichtung, die wahlweise mit einer Kommunikationsleitung (13) verbindbar ist, wobei die Kommunikationsvorrichtung eine Strombegrenzungsvorrichtung (15) enthält, die konfiguriert ist, um Strom, der von der Kommunikationsleitung fließt, zu begrenzen, wobei die Strombegrenzungsvorrichtung umfasst:
einen ersten Transistor (Tr1), dessen Basis mit dem Teilungspunkt eines Spannungsteilers verbunden ist, so dass er so konfiguriert ist, dass er durch eine Kommunikationsleitungsspannung durchschaltet, wenn die Kommunikationsleitung mit der Kommunikationsvorrichtung verbunden ist;
einen ersten ohmschen Widerstand (R1), der mit dem Kollektor des ersten Transistors und mit der Kommunikationsleitung (13) in Reihe geschaltet ist;
einen zweiten Transistor (Tr2), dessen Basis mit dem Teilungspunkt gekoppelt ist und der so konfiguriert ist, dass er durchschaltet, wenn ein Strombetrag, der gleich oder höher als ein vorgeschriebener Pegel ist, durch den ersten ohmschen Widerstand fließt;
einen zweiten ohmschen Widerstand (R2), der einen Teil des Spannungsteilers bildet und der so konfiguriert ist, dass er einen vom Kollektor des zweiten Transistors fließenden Strom empfängt, wenn der zweite Transistor durchschaltet; und
einen dritten ohmschen Widerstand (R4), der zwischen die Basis des zweiten Transistors (Tr2) und den ersten ohmschen Widerstand (R1) geschaltet ist;
wobei nichtlineare Gleichstromcharakteristiken erhalten werden, indem der von der Kommunikationsleitung fließende Strom dem zweiten ohmschen Widerstand unter Umgehung des ersten ohmschen Widerstandes zugeführt wird, wenn die Kommunikationsleitungsspannung einen Wert erreicht, bei dem ein Strom, der gleich oder höher als ein vorgeschriebener Betrag ist, durch den ersten ohmschen Widerstand fließen würde;
und die nichtlinearen Gleichstromcharakteristiken der Vorrichtung durch Einstellen eines Wertes des dritten ohmschen Widerstands bestimmt werden; und die Strombegrenzungsvorrichtung ferner zwischen dem Kollektor des zweiten Transistors (Tr2) und dem Teilungspunkt eine Schaltvorrichtung (151) umfasst.

## Revendications

1. Appareil de communication pouvant être connecté de façon sélective à une ligne de communication (13), ledit appareil de communication comprenant un dispositif de limitation de courant (15) configuré pour limiter un courant dans sa circulation depuis la ligne de communication, dans lequel ledit dispositif de limitation de courant comprend :
un premier transistor (Tr1) dont la base est connectée au point de division d'un diviseur de tension de manière à ce qu'il soit configuré pour être rendu passant par une tension de ligne de communication lorsque la ligne de communication est connectée à l'appareil de communication ;
une première résistance (R1) connectée en série entre le collecteur du premier transistor et la ligne de communication (13) ;
un second transistor (Tr2) dont la base est couplée audit point de division et qui est configuré de manière à être rendu passant lorsqu'une quantité de courant égale ou supérieure à un niveau prescrit circule au travers de la première résistance ;
une seconde résistance (R2) qui forme une partie dudit diviseur de tension configurée pour recevoir un courant qui circule depuis le collecteur du second transistor lorsque le second transistor est rendu passant ; et
une troisième résistance (R4) qui est connectée entre la base du second transistor (Tr2) et la première résistance (R1) ;
dans lequel des caractéristiques de courant continu du type non linéaire sont obtenues en appliquant ledit courant qui circule depuis la ligne de communication sur la seconde résistance en dérivant la première résistance, lorsque la tension de ligne de communication atteint une valeur qui est telle qu'un courant égal ou supérieur à la quantité prescrite devrait circuler au travers de la première résistance ; et
les caractéristiques de courant continu du type non linéaire du dispositif sont déterminées en réglant une valeur de la troisième résistance ; et ledit dispositif de limitation de courant comprend en outre un dispositif de commutation (151) entre le collecteur du second transistor (Tr2) et ledit point de division.
